# EUROPEAN PATENT SPECIFICATION

(11) **EP 2 798 431 B1**
(45) Date of publication and mention of the grant of the patent: **14.02.2018**
(21) Application number: 11878451.1
(22) Date of filing: 29.12.2011
(51) Int. Cl.: G06F 1/26, H04B 3/54, H01R 24/58, G06F 1/16, H02J 4/00

(54) **WIRED COMMUNICATIONS CONNECTOR INCLUDED IN A POWER DEVICE**
STECKER FÜR VERKABELTE NACHRICHTENÜBERTRAGUNG IN EINER LEISTUNGSVORRICHTUNG
CONNECTEUR DE COMMUNICATION FILAIRE INCLUS DANS UN DISPOSITIF D'ALIMENTATION

(43) Date of publication of application: 05.11.2014
(73) Proprietor: Intel Corporation, Santa Clara, CA 95054 (US)
(72) Inventor: NAOURI, Ygdal, 92108 Jerusalem (IL)
(74) Representative: Rummler, Felix
(86) International application number: PCT/US2011/067843
(87) International publication number: WO 2013/101063

(56) References cited:
- DE-U1-202011 005 404
- US-A1- 2004 136 384
- US-A1- 2004 153 543
- US-A1- 2006 197 387
- US-A1- 2006 199 427
- US-A1- 2007 149 258
- US-A1- 2008 104 301
- US-A1- 2010 011 228

## Description

### TECHNICAL FIELD

The inventions generally relate to including a communications connector in a power device.

### BACKGROUND

The reliability and availability of wireless internet technologies have increased significantly in recent years. As a result Original Equipment Manufacturers (OEMs) have stopped including wired communication connectors such as RJ45 connectors, Ethernet connectors, etc. on the motherboards of some computing platforms such as, for example, laptops, tablets, ultra light and thin (ULT) platforms, ultrabooks, and other computing platforms. This has helped to save power as well as board real estate in the computing platform.

However, a wired communications connection such as an Ethernet connection is still helpful in some situations and would be advantageous. For example, users needing large internet connectivity throughputs (for example, to download large files) may wish to make use of a wired connection. Additionally, in some cases, a user may prefer to shut down wireless transmitters on the platform as much as possible, and may need a wired connection when the wireless transmitters are shut down.

It does not appear that legacy communications connectors such as Ethernet connectors or RJ45 connectors will be replaced with a thinner connection on the enterprise or home installed base. Therefore, one option might be to provide optional Universal Serial Bus (USB) to Ethernet dongles (or USB to RJ45 dongles) that include wired communication parts (or Ethernet parts) such as a MAC controller and/or an Ethernet or Gigabit Ethernet (GbE) PHY. One drawback of such an approach is that such a USB to Ethernet or USB to RJ45 dongle would still use a small percentage of the power provided by the device (for example, a laptop computer), thus reducing the battery life of the device even if the PHY in the dongle is operated in a low power idle mode. Further, such dongles cannot be docked into docking stations at the enterprise or at the home. Without the ability to use a docking station due to the use of such a dongle, users sitting at their enterprise or home location need to perform two connection operations, one to connect a power cable to recharge the laptop battery, and one to connect the communications cable (Ethernet cable) to obtain the wired communication performance advantages. Another disadvantage of a dongle such as a USB to Ethernet or USB to RJ45 dongle is that they would not support Manageability Engine (ME) features.

The present inventor has recognized that it would be beneficial to provide a wired communications connection such as a wired Ethernet connection via a legacy connector such as an RJ45 connector in some platforms such as small and/or mobile platforms, for example, laptop computers, netbook computers, tablets, ultra light and thin (ULT) platforms, ultra-books, or other computing platforms.

US2004/153543A1 discloses a power supply that includes networking capabilities where networking data is sent and received to and from other systems over the power line and to and from the rest of the system that is being powered over the power supplies output power. The power supply can be included within a system or be external to the system, but in either case, the data from the network is transferred to and from the rest of the system over the same cables that are used to transfer output power from the power supply to the system.

The present invention provides an apparatus according to claim 1.

### BRIEF DESCRIPTION OF THE DRAWINGS

The inventions will be understood more fully from the detailed description given below and from the accompanying drawings of some embodiments of the inventions which, however, should not be taken to limit the inventions to the specific embodiments described, but are for explanation and understanding only.
FIG 1 illustrates a system according to some embodiments of the inventions.
FIG 2 illustrates a system according to some embodiments of the inventions.

### DETAILED DESCRIPTION

Some embodiments of the inventions relate to including a communications connector (for example, such as a legacy communications connector) in a power device.

In some examples, a legacy wired communication connector is combined into a power device. In some embodiments, a power device is used as a light and/or partial docking station.

In some embodiments a device can be coupled to a power device that is capable of being coupled to the device. The power device is to provide power to the device and to include a communications connector to allow communications with the device.

In some embodiments a device can be coupled to a power device that is capable of being coupled to the device. The power device is to provide power to the device and to include a wired communications connector to allow wired communications with the device.

According to some embodiments, the present inventor has recognized that users are not typically able to be mobile when they desire to use a wired communications connection such as an Ethernet connection, and that it is not a requirement that a communications cable such as an Ethernet cable be plugged directly into the mobile device, platform, or motherboard. In this manner, according to some embodiments, the communications cable can be plugged into a communications connector that is included in or on a power device such as a power cable, power transformer, or power transformer box that provides power to the mobile device (for example, to transform power from Alternating Current or AC power to Direct Current or DC power). In some embodiments, a user is able to recharge a battery on a mobile device such as, for example, a small form factor device, a small platform device, a mobile platform device, a laptop computer, a netbook computer, a tablet, an ultra light and thin (ULT) device, and ultra-book, etc., while also using a wired communications connection such as an Ethernet connection, for example. This may be accomplished according to some embodiments, using a single convenient connector plug-in operation.

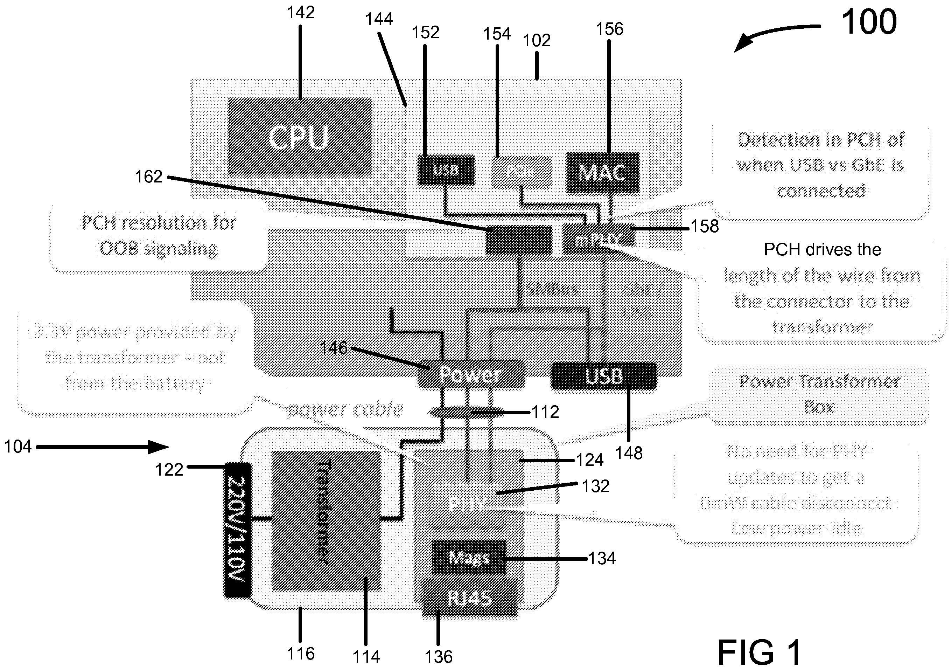

FIG 1 illustrates a system 100 according to some embodiments of the inventions. System 100 includes a device 102 (for example, an electronic device) and a power device 104 used to provide power to the device 102. In some examples device 102 is a device, platform, and/or motherboard. In some embodiments device 102 is a small form factor device such as a mobile device. In some embodiments device 102 is a mobile device such as, for example, a mobile platform, a laptop computer, a netbook computer, a tablet, an ultra light and thin or ULT device, an ultra-book, a mobile phone, a personal digital assistant, a music player, or any other mobile device. In some embodiments, power device 104 is a power cable, a power transformer, and/or a power transformer box. In some embodiments, power device 104 includes a power cable 112, a power transformer 114 and a power transformer box 116. Power transformer box 116 includes power transformer 114, power connector 122, and communications card 124. In some examples, power connector 122 is able to be coupled to AC voltages (for example, 220 volts AC and/or 110 volts AC). In some examples, power connector 122 includes an additional portion of power cable 112 that runs from power transformer box 116 to a plug on the power cable 112 that is pluggable into a power outlet such as, for example, an AC power outlet. In some examples, power transformer 116 transforms AC power from connector 122 to DC power provided to device 102.

In some examples, communications card 124 is a small card. In some embodiments, communications card 124 is pluggable and/or slideable into a slot in power transformer box 116, for example. In some examples, communications card 124 is one or more of a fiber connector, an RJ45 card, an Ethernet card, or a Gigabit Ethernet card. In some embodiments, communications card 124 includes PHY parts 132, magnetic 134 and a communications connector 136. In some embodiments, communications connector 136 is one or more of an Ethernet connector, an RJ45 connector, or a Gigabit Ethernet connector. In some embodiments, connector 136 is one or more of a mouse connector, a keyboard connector, or a monitor connector. In some examples, additional cards are included in or near power cable 112, power transformer 114, or power transformer box 116 that include connectors for additional communications devices.

In some embodiments, card 124 carries many functionalities that have previously been provided by a docking station (for example, mouse, keyboard, monitor, Ethernet, etc.) In some examples, each of the functionalities are provided by a separate dedicated add-on card 124. In these examples, each add-on card is capable of living and functioning independently from the other add-on cards. In some examples, each add-on card includes at least the necessary components that must be physically placed close to the corresponding connector. For example, an add-on card for an RJ45 connector implementation according to some embodiments, the magnetic 134 and PHY 132 is included on the add-on card, and in some embodiments a MAC is included on the add-on card. In some examples, different elements are partitioned between the add-on card (and/or included somewhere in the power device, power transformer box, etc.) and the platform in different ways. In some examples, one or more add-on cards for a mouse, keyboard, and/or monitor implementation may require only a mouse connector, a keyboard connector, and/or a monitor connector, for example. In some examples, more components may be necessary (for example, in a Thunderbolt connector implementation). In some examples, additional components on one or more add-on cards may be required. For example, some enhanced electrical driving capabilities may be required (for example, in an mPHY implementation) in order to carry signals over the distance between the platform and the card, which were not previously required when all components were previously provided in the platform.

In some examples, device 102 includes a processor 142 (for example, a Central Processing Unit or CPU), a platform 144, a power connector 146, and a bus connector 148 (for example, a Universal Serial Bus or USB connector). In some examples, platform 144 is one or more of a motherboard, a platforms controller hub (PCH), a mobile platform, etc.

In some examples, platform 144 includes a USB device 152, a Peripheral Components Interconnect Express (PCIe) device 154, MAC communications parts 156, mPHY parts 158, and a Management Engine (ME) 162. In some examples, ME 162 drives the Serial Management bus (SMBus). In some examples, an SMBus interface manages the PHY (for example, PHY 132)

In some examples, elements of platform 144 such as, for example, in Ethernet implementations, some or all of USB device 152, PCIe device 154, MAC 156, mPHY 158, and/or other elements are included in a Platforms Controller Hub (PCH).

In some examples, the mPHY parts 158 of platform 144 detect when USB or Gigabit Ethernet, for example, are connected, and route communications signals accordingly to USB connector 148 (USB communications signals) or through power connector 146 and lines of power cable 112 to communications card 124 (for example, Gigabit Ethernet communications signals). In some examples, a Platforms Controller Hub (PCH) is used to drive the length of the wire from the power connector 146 to the PHY parts 132. In some examples, Management Engine (ME) 162 is used to resolve out of bound (OOB) signaling, and is coupled to an SMBus that is coupled to power connector 146 and USB connector 148.

In some examples, mPHY 158 is responsible for PHY functionality attached to either an Ethernet or a USB connection, for example, depending on the routing made on the platform 144, for either the MAC 156 or the USB block 152, respectively (for example, in the PCH). In some examples, since the mPHY 158 is shared between the MAC 156 and USB 152 blocks, it cannot serve both at the same time. Therefore, in some examples, the USB connector 148 that is connected to mPHY 158 at the platform 144 is not used while an Ethernet connection has already been detected, for example. Similarly, in some examples, the Ethernet connector is not used while a USB connection has already been detected, for example.

In some examples, power is provided to card 124 (for example, 3.3 volts) by power transformer 114, and no power is provided to card 124 from the battery of the device 102. In some embodiments, PHY parts 132 do not need to obtain PHY updates to get a 0 mW cable disconnect low power idle signal, since power is provided from power transformer 114 (for example, in implementations where the PHY is upgraded to support a particular platform power saving protocol). However, in some examples, since the power source used by PHY 132 is not the platform battery power, such features and support are not necessary.

Although FIG 1 illustrates device 116 as a power transformer box, it is contemplated that all or some of the elements of device 116 could be included in the power cable 112. For example, one or more of communications card, 124, PHY parts 132, magnetic 134, or communications connector 136 are provided in some embodiments in the power cable 112. In some examples, communications card 124 is not includes, and one or more of PHY parts 132, magnetic 134, or communications connector 136 are included in power transformer box 116 or in power cable 112. In some examples, some or all of these features are included in power transformer 114. In some examples, some of these features are included in one of the power devices 112, 114, and 116, and some features are included in another of the power devices 112, 114, and 116.

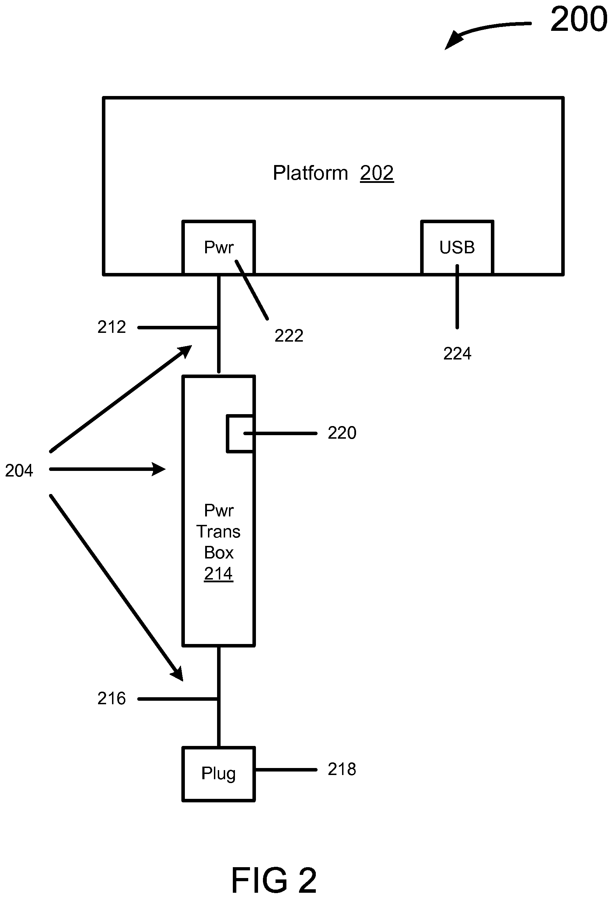

FIG 2 illustrates a system 200 according to some embodiments. In some embodiments, system 200 includes a platform 202 and a power device 204. In some embodiments, power device 204 includes a power cord (or power cable) 212, a power transformer box 114, a power cord (or power cable) 216, and a power plug 218 (for example, an AC power plug). In some embodiments, power transformer box 214 includes a wired communications connector 220 (for example, in some embodiments, an Ethernet connector, a Gigabit Ethernet connector, etc.) In some embodiments, platform 202 includes a power connector 222 and/or a USB connector 224. In some embodiments, power device 204 is capable of being plugged into power connector 222 or platform 202. In some embodiments, all or some portions of power device 204 include communications wires to transmit wired communications signals (for example, in power cord 212 and power transformer box 214).

In some examples, a legacy wired communication connector is combined into a power device. In some examples, a power device is used as a light and/or partial docking station.

In some embodiments, computing platforms with small form factors (for example, small platforms, mobile platforms, laptop computers, netbook computers, tablets, ultra light and thin or ULT platforms, ultra-books, or other computing platforms) are enabled by eliminating the need for a connector jack such as a wired communications connector on the device itself (either on the device, on the platform, or on the motherboard, for example).

In some embodiments, a wired communications connector (for example, an Ethernet connector and/or an RJ45 connector) is moved outside of the motherboard of a computing platform (for example, small platforms, mobile platforms, laptop computers, netbook computers, tablets, ultra light and thin or ULT platforms, ultra-books, or other computing platforms). In some embodiments, such a wired communications connector is moved to the power cord, power supply, power transformer box, and/or power transformer of the computing platform.

In some embodiments, the power cord (or power cable), power supply, power transformer box, and/or power transformer of the computing platform includes a small card that includes a Gigabit Ethernet (GbE) PHY, the magnetics, a voltage converter and/or voltage regulator, and is coupled to a wired communications connector that may also be on the small card (for example, an Ethernet connector and/or an RJ45 connector), or in some embodiments some of those items in addition to the wired communications connector.

In some examples, a MAC controller, for example, such as a Gigabit Ethernet (GbE) MAC controller is included in the power cord, power supply, power transformer box, and/or power transformer. In some examples, a MAC controller such as, for example, a GbE MAC controller is included on the motherboard or in some examples a MAC controller such as, for example, a GbE MAC controller is embedded in the motherboard. In some examples, a MAC controller such as a GbE MAC controller is embedded in a platforms controller hub (PCH) on the motherboard. In some examples, Peripheral Component Interconnect Express (PCIe) interface wires are extended to run over a power device such as a power cable, power transformer and/or power transformer box that extends between the platform and the power transformer via a motherboard power connector. In some examples, MAC to PHY interface wires are extended to run over a power device such as a power cable that extends between the platform and the power transformer via a motherboard power connector. In some examples, PCIe line drivers and/or MAC to PHY interface drivers are implemented that are strong enough to cover a distance between the motherboard and a power transformer via a power cable and power cable connector. In some examples, mechanical changes are implemented to the power connector to carry extra communications signals (for example, in some examples PCIe lanes and in some embodiments a MAC to PHY interface).

In some examples, mechanical changes are made to the power cord, power supply, power transformer box, and/or power transformer to add a compartment for a small card that includes a Gigabit Ethernet (GbE) PHY, the magnetics, a voltage converter and/or voltage regulator, and is coupled to a wired communications connector that may also be on the small card. In some examples, the compartment for the small card is closed into a thermally isolated bulkhead.

In some examples, the power required for a small Gigabit Ethernet card is directly derived from an output of a local transformer, and does not use power from the battery of the mobile device itself (for example, the laptop battery, tablet battery, ULT battery, ultra-book battery, etc.) In some examples the sidewalls of the mobile device does not need to include an RJ45 connector or Ethernet connector, allowing no impact on the thickness of the mobile device from a wired communications connector.

According to some examples, docking stations no longer will need to include a wired communications connector such as an Ethernet connector (or RJ45 connector) because a wired communications connector is integrated into a power cord or power transformer (or power transformer box) of the device (or both, for example, where the power transformer and/or power transformer box is/are included on the power cord). This allows the wired communications connector to be included ahead of the docking station equipment (for example, between the AC wall power outlet and the docking station).

According to some embodiments, a user is able to plug in power devices such as a power cable, power transformer and/or power transformer box as well as communications cables with a single plug in operation of a power device (power cable and/or power transformer) of a device (for example, of a mobile device).

In some embodiments a Gigabit Ethernet card (for example, a small Gigabit Ethernet card) is included in the power device (for example, the power cable, power transformer, and/or power transformer box) that is provided to the consumer when they purchase a device such as a mobile device, for example. This allows there to be no impact on the thickness of the device due to the need to include a wired communications connector on the device itself, and also does not require a separate dongle such as a USB to Ethernet dongle, for example.

In some embodiments a Gigabit Ethernet card (for example, a small Gigabit Ethernet card) is a plug-in optional card that can in some embodiments be sold to end users of a device such as a mobile device. The optional plug-in card can be plugged into, for example, the power device (for example, the power cable, power transformer, and/or power transformer box) that is provided to the consumer when they purchase a device such as a mobile device, for example. In some embodiments, the optional plug-in card is plugged into a slot in the power device. This allows there to be no impact on the thickness of the device itself due to the need to include a wired communications connector on the device, and also does not require a separate dongle such as a USB to Ethernet dongle, for example. In such embodiments, the user has the option of no wired mobile communications for a device such as a mobile device, or to buy the optional card that can be plugged into the power device (for example, the power cable, power transformer, and/or power transformer box).

Some embodiments have been described herein as being related to, for example, wired communications connectors and/or wired communications including Ethernet, RJ45, Gigabit Ethernet, etc. However, some embodiments apply to other wired communications connectors and/or wired communications and are not limited to the wired communications connectors and/or wired communications protocols discussed herein. For example, according to some embodiments, other wired communications connectors may be included in the power device (for example, the power cable, power transformer, and/or power transformer box) for wired communications with, for example, a keyboard, a monitor, and/or a mouse. Keyboard, monitor, and/or mouse signals may be run over the power cable as well as adding required keyboard, monitor, and/or mouse connectors in the power device (for example, a power cable, power transformer, and/or power transformer box).

According to some examples, a power device such as a power cable, power transformer, and/or power transformer box may be used as a "light" docking station by adding optional add-on plug-in connectors typically included on a docking station.

Monitor cables to external monitors are made up of fewer and fewer signals as time goes on, and according to some embodiments, a monitor cable may be plugged into a power device (for example, a power cable, power transformer, and/or power transformer box) of a device in a manner that helps to change the power device into a complete docking station, for example. Some examples have been described herein in which MAC parts are included in the device (and/or on the motherboard, for example) and PHY parts are included in the power device (for example, in the power cable, power transformer, and/or power transformer box). However, according to some examples, both the MAC parts and PHY parts are included in the power device.

Although some embodiments have been described herein as being implemented in a particular way or according to a particular communications protocol, for example, according to some embodiments these particular implementations may not be required.

Although some embodiments have been described in reference to particular implementations, other implementations are possible according to some embodiments. Additionally, the arrangement and/or order of circuit elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Some embodiments may be implemented in one or a combination of hardware, firmware, and software. Some embodiments may also be implemented as instructions stored on a machine-readable medium, which may be read and executed by a computing platform to perform the operations described herein. A machine-readable medium may include any mechanism for storing or transmitting information in a form readable by a machine (e.g., a computer). For example, a machine-readable medium may include read only memory (ROM); random access memory (RAM); magnetic disk storage media; optical storage media; flash memory devices; electrical, optical, acoustical or other form of propagated signals (e.g., carrier waves, infrared signals, digital signals, the interfaces that transmit and/or receive signals, etc.), and others.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

Although flow diagrams and/or state diagrams may have been used herein to describe embodiments, the inventions are not limited to those diagrams or to corresponding descriptions herein. For example, flow need not move through each illustrated box or state or in exactly the same order as illustrated and described herein.

The inventions are not restricted to the particular details listed herein. Indeed, those skilled in the art having the benefit of this disclosure will appreciate that many other variations from the foregoing description and drawings may be made within the scope of the present inventions. Accordingly, it is the following claims including any amendments thereto that define the scope of the inventions.

## Claims

1. An apparatus comprising
a power transformer (104) that is configured to be coupled to a mobile platform device (102) via a power cable (112), the power transformer further configured to provide power to the mobile platform device and including a pluggable communications card (124) comprising a wired communications connector configured to enable communications with the mobile platform device via power cable (112); **characterised in that** the communications card (124) is further configured to provide Ethernet functionality and functionalities of a docking station via a communications connector 136.

2. The apparatus of claim 1, wherein the mobile platform device is one or more of a tablet, an ultra light and thin device, an ultra-book, a mobile phone, a personal digital assistant, or a music player.

3. A system comprising an apparatus of claim 1.

4. The system of claim 3, wherein the mobile platform device is one or more of a tablet, an ultra light and thin device, an ultra-book, a mobile phone, a personal digital assistant, or a music player.

5. The system of claim 3, wherein the communications card includes communications parts.

## Patentansprüche

1. Vorrichtung, die Folgendes umfasst:
einen Leistungstransformator (104), der dazu konfiguriert ist, über ein Stromkabel (112) mit einer Mobilplattformvorrichtung (102) gekoppelt zu werden, wobei der Leistungstransformator ferner dazu konfiguriert ist, Strom an die Mobilplattformvorrichtung zu liefern, und eine steckbare Kommunikationskarte (124) beinhaltet, die einen verdrahteten Kommunikationsverbinder umfasst, der dazu konfiguriert ist, Kommunikationen mit der Mobilplattformvorrichtung über das Stromkabel (112) zu ermöglichen;
**dadurch gekennzeichnet, dass**
die Kommunikationskarte (124) ferner dazu konfiguriert ist, Ethernet-Funktionalität und Funktionalitäten einer Dockingstation über einen Kommunikationsverbinder 136 bereitzustellen.

2. Vorrichtung nach Anspruch 1, wobei die Mobilplattformvorrichtung ein Tablet und/oder eine ultraleichte und ultradünne Vorrichtung und/oder ein Ultra-Book und/oder ein Mobiltelefon und/oder ein Personal Digital Assistant und/oder ein Musik-Player ist.

3. System, das eine Vorrichtung nach Anspruch 1 umfasst.

4. System nach Anspruch 3, wobei die Mobilplattformvorrichtung ein Tablet und/oder eine ultraleichte und ultradünne Vorrichtung und/oder ein Ultra-Book und/oder ein Mobiltelefon und/oder ein Personal Digital Assistant und/oder ein Musik-Player ist.

5. System nach Anspruch 3, wobei die Kommunikationskarte Kommunikationsteile beinhaltet.

## Revendications

1. Appareil comprenant :
un transformateur d'alimentation (104) qui est configuré pour être couplé à un dispositif de plateforme mobile (102) par le biais d'un câble d'alimentation (112), le transformateur d'alimentation étant en outre configuré pour alimenter le dispositif de plateforme mobile et comprenant une carte de communication enfichable (124) comprenant un connecteur de communication filaire configuré pour permettre la communication avec le dispositif de plateforme mobile par le biais du câble d'alimentation (112) ;
**caractérisé en ce que**
la carte de communication (124) est en outre configurée pour assurer une fonctionnalité Ethernet et des fonctionnalités d'une station d'accueil par le biais d'un connecteur de communication (136).

2. Appareil selon la revendication 1, dans lequel le dispositif de plateforme mobile est au moins l'un d'une tablette, d'un dispositif ultra-léger et mince, d'un ultraportable, d'un téléphone portable, d'un assistant numérique personnel et d'un lecteur de musique.

3. Système comprenant un appareil selon la revendication 1.

4. Système selon la revendication 3, dans lequel le dispositif de plateforme mobile est au moins l'un d'une tablette, d'un dispositif ultra-léger et mince, d'un ultraportable, d'un téléphone portable, d'un assistant numérique personnel et d'un lecteur de musique.

5. Système selon la revendication 3, dans lequel la carte de communication comprend des composants de communication.
